# EUROPEAN PATENT APPLICATION

(11) **EP 2 871 884 A1**
(43) Date of publication of application: **13.05.2015**
(21) Application number: 13812709.7
(22) Date of filing: 03.07.2013
(51) Int. Cl.: H04W 28/08, H04W 36/12, H04W 84/10

(54) **MOBILE COMMUNICATION SYSTEM, HOME BASE STATION DEVICE, POSITION MANAGING DEVICE, COMMUNICATION METHOD, AND MOBILE STATION DEVICE**

(30) Priority: 03.07.2012 JP 2012149119
(71) Applicant: Sharp Kabushiki Kaisha, Osaka-shi, Osaka 545-8522 (JP)
(72) Inventor: ENOMOTO, Masayuki, Osaka 545-8522 (JP); ARAMOTO, Masafumi, Osaka 545-8522 (JP)
(74) Representative: Müller Hoffmann & Partner
(86) International application number: PCT/JP2013/068213
(87) International publication number: WO 2014/007274

(57) **Abstract**

Provided is a mobile communication system in which a SIPTO@LN capable LGW is selected and a PDN connection is established during a GW selection process of an MME in a PDN connection establishment procedure. A home base station device acquires identification information of an access control device and availability information of offload of the access control device through a local network, a position managing device receives information including the identification information of the access control device and the availability information of offload of the access control device from the home base station, makes a request for establishment of PDN connection, the position managing device selects an offload possible access control device, based on the request from the mobile station device, the identification information of the access control device, the availability information of offload of the access control device, and information of the home base station device, and establishes the PDN connection between the access control device and the mobile station device.

## Description

### Technical Field

The present invention relates to a mobile communication system in which a home network and a core network are connected through an external network, a home base station device to which a mobile station device is connected and an access control device are connected to the home network, and a position managing device is connected to the core network.

### Background Art

The 3rd generation partnership project (3GPP), which is the standardization organization for a mobile communication systems, is promoting specification work for an evolved packet system (EPS) described in NPL 1 below as a next generation mobile communication system, and has studied a home eNodeB (HeNB: home base station) which is a small base station installed in a house as constituent equipment of the EPS.

The HeNB constructs a small wireless cell called a femto cell, and accommodates user equipment (UE: mobile terminal device) by using the same wireless access technology as that of a general base station. Then, the HeNB is connected to a core network of a mobile communication system through a broadband network, and is able to relay communication data of the accommodated UE.

Further, NPL 2 below discloses a candidate of architecture for implementing a selected IP traffic offload (SIPTO). While UE is connected to a base station (eNB), the SIPTO provides data communication to the UE accommodated in the eNB, through the broadband network, without passing through the core network of the mobile communication system.

Further, NPL 2 discloses a candidate of architecture for implementing LIPA. While the UE is connected to a home base station (HeNB), the LIPA provides the UE with a connection-to-the home network connected to the HeNB.

Further, NPL 3 below discloses the SIPTO which provides data communication to the UE accommodated in the HeNB, through the broadband network, without passing through the core network of the mobile communication system, while UE is connected to a base station (HeNB). In the SIPTO described here, it is not possible to perform an access in the home network. In other words, the SIPTO provided to the UE accommodated in the HeNB is data communication different from the above-described LIPA.

In NPL 3, a method in which the UE performs data communication from the eNB or the HeNB through an offload point (a traffic offload function (TOF)) and the broadband network in the mobile communication network is described as SIPTO@RN (radio access network), and a method in which the UE performs data communication from the HeNB through the LGW and the broadband network is described as a SIPTO@LN (local network).

Here, the SIPTO@RN and the SIPTO@LN are different services, and the SIPTO@RN is an offload service using the TOF arranged in the core network, while the SIPTO@LN is an offload service using the LGW.

Further, NPL 4 discloses a procedure for establishing a PDN connection of SIPTO. The PDN connection is a communication path established between an access control device and a UE for each service. Here, the PDN connection used in the offload service is established even in the SIPTO@LN.

When establishing the PDN connection, a position managing device (MME: mobility management entity) in the core network performs GW selection for selecting an access control device which is an end point of the PDN connection.

Further, in the related art, the LGW and the HeNB are formed with the same device, the LGW and the HeNB have an one-to-one correspondence, and if the HeNB address is detected, the MME can simultaneously determine the LGW@CN address, and properly perform the GW selection.

### Citation List

### Non Patent Literature

NPL 1: 3GPP TS23.401 General Packet Radio Service (GPRS) enhancements for Evolved Universal Terrestrial Radio Access Network (E-UTRAN) access
NPL 2: 3GPP TR 23.829 local IP access and Selected IP Traffic Offload
NPL 3: 3GPP TR 23.859 the LIPA Mobility and SIPTO at the Local Network
NPL 4: "User interactions for SIPTO@LN acceptance", 3GPP TSG SA WG2 #85, S2-112455

### Summary of Invention

### Technical Problem

Here, architecture in which a plurality of HeNBs are connected to a single LGW has been studied as a configuration of the home network. Thus, a UE is able to move between the HeNBs, with the LGW as an anchor.

In this case, since the LGW and the HeNB are different devices, even if an MME can detect the address of the HeNB, the MME cannot simultaneously detect the address of the LGW. Accordingly, when the HeNB and the LGW are formed with the same device, the MME can easily detect the LGW from the HeNB address, but if the HeNB and the LGW are separated, a new unit that detects the LGW from the HeNB address is needed.

Further, even if the MME can easily detect the LGW@CN address of the LGW connected to the HeNB, the LGW@CN address MME could not determine whether the detected LGW can use the SIPTO@LN.

In other words, during a PDN connection establishment procedure, in order for the MME to select the LGW during a GW selection process, a unit causing the MME to detect the LGW is required in a new architecture in which a plurality of HeNBs are connected to a single home network.

Further, even if the MME can detect the LGW connected to the HeNB, a unit is needed which causes the MME to detect a SIPTO capable LGW during the PDN connection establishment procedure, to select the SIPTO@LN capable LGW during the GW selection process.

In other words, since the MME cannot select the SIPTO@LN capable LGW during the GW selection process in the PDN connection establishment procedure, the MME cannot complete the PDN connection establishment procedure for performing the SIPTO@LN and therefore it was not possible to establish the PDN connection in the SIPTO@LN.

Further, since the MME cannot complete the PDN connection establishment procedure in the SIPTO@LN and cannot establish the PDN connection, it was not possible to transmit and receive data by the SIPTO@LN.

The present invention has been made in view of such circumstances, and an object is to provide a mobile communication system in which a SIPTO@LN capable LGW is selected and the PDN connection is established during the GW selection process of the MME in the PDN connection establishment procedure.

### Solution to Problem

To solve the above problems, a mobile communication system according to the present invention is a mobile communication system in which a home network and a core network are connected through an external network, a home base station device to which a mobile station device is connected and an access control device are connected to the home network, and a position managing device is connected to the core network,
wherein the home base station device
acquires identification information of the access control device and availability information of offload through a local network of the access control device,
manages the identification information of the access control device and the availability information of offload of the access control device,
notifies the position managing device of the identification information of the access control device and the availability information of offload of the access control device,
wherein the position managing device
receives information including the identification information of the access control device and the availability information of offload of the access control device from the home base station device, and
manages the identification information of the access control device, the availability information of offload of the access control device, and information of the home base station device in association with each other,
wherein the mobile station device makes a request for establishment of PDN connection for offload through the local network, and
wherein the position managing device selects an offload possible access control device, based on the request from the mobile station device, the identification information of the access control device, the availability information of offload of the access control device, and the information of the home base station device, and establishes PDN connection between the access control device and the mobile station device.

A home base station device according to the present invention is a home base station device in a mobile communication system in which a home network and a core network are connected through an external network, a home base station device to which a mobile station device is connected and an access control device are connected to the home network, and a position managing device is connected to the core network,
wherein the position managing device is a device which selects the access control device, and establishes PDN connection between the access control device and the mobile station device,
acquires identification information of the access control device and availability information of offload of the access control device through a local network,
manages the identification information of the access control device and the availability information of offload of the access control device, and
requests the position managing device to register information used for selection of the access control device when the position managing device establishes the PDN connection for offload through a local network, by notifying the position managing device of the identification information of the access control device and the availability information of offload of the access control device.

A position managing device according to the present invention is a position managing device in a mobile communication system in which a home network and a core network are connected through an external network, a home base station device to which a mobile station device is connected and an access control device are connected to the home network, and a position managing device is connected to the core network,
wherein the position managing device
receives information including the identification information of the access control device and the availability information of offload of the access control device from the home base station device, and
manages the identification information of the access control device, the availability information of offload of the access control device, and information of the home base station device in association with each other,
wherein the mobile station device makes a request for establishment of PDN connection for offload through the local network, and
wherein the position managing device selects an offload possible access control device, based on the request from the mobile station device, the identification information of the access control device, the availability information of offload of the access control device, and the information of the home base station device, and establishes PDN connection between the access control device and the mobile station device.

A communication method according to the present invention is a communication method of a mobile communication system in which a home network and a core network are connected through an external network, a home base station device to which a mobile station device is connected and an access control device are connected to the home network, and a position managing device is connected to the core network,
wherein the home base station device
acquires identification information of the access control device and availability information of offload of the access control device through a local network,
manages the identification information of the access control device and the availability information of offload of the access control device,
notifies the position managing device of the identification information of the access control device and the availability information of offload of the access control device,
wherein the position managing device
receives information including the identification information of the access control device and the availability information of offload of the access control device from the home base station device, and
manages the identification information of the access control device, the availability information of offload of the access control device, and information of the home base station device in association with each other,
wherein the mobile station device makes a request for establishment of PDN connection for offload through the local network, and
wherein the position managing device selects an offload possible access control device, based on the request from the mobile station device, the identification information of the access control device, the availability information of offload of the access control device, and the information of the home base station device, and establishes PDN connection between the access control device and the mobile station device.

### Advantageous Effects of Invention

A HeNB notifies an MME of a SIPTO@LN flag of an LGW, such that the MME can manage a SIPTO@LN capable LGW. Thus, the MME can select the SIPTO@LN capable LGW during a GW selection process in a PDN connection establishment procedure.

Further, since the MME can select the SIPTO@LN capable LGW during the GW selection process, the MME can complete the PDN connection establishment procedure for establishing a PDN connection of SIPTO@LN. Further, by establishing the PDN connection of the SIPTO@LN, a user (UE) is able to initiate data communication using the SIPTO@LN.

Further, by establishing the PDN connection of the SIPTO@LN, a mobile communication provider is able to initiate data communication using the SIPTO@LN. Brief Description of Drawings

[Fig. 1] Fig. 1 is a diagram briefly illustrating a mobile communication system.
[Fig. 2] Fig. 2 is a functional configuration of an MME in the present embodiment.
[Fig. 3] Fig. 3 includes views showing examples of various data structures in a storage unit of the MME in the present embodiment.
[Fig. 4] Fig. 4 is a functional configuration of an LGW in the present embodiment.
[Fig. 5] Fig. 5 includes views showing examples of various data structures in a storage unit of the LGW in the present embodiment.
[Fig. 6] Fig. 6 is a functional configuration of an HeNB in the present embodiment.
[Fig. 7] Fig. 7 includes views showing examples of various data structures in a storage unit of the HeNB in the present embodiment.
[Fig. 8] Fig. 8 is a diagram illustrating a process flow in a first embodiment.
[Fig. 9] Fig. 9 is a diagram illustrating an example of information elements included in an UPLINK NAS TRANSPORT message.
[Fig. 10] Fig. 10 is a diagram illustrating a process flow in the first embodiment.
[Fig. 11] Fig. 11 is a diagram illustrating GW selection by the MME in the first embodiment.
[Fig. 12] Fig. 12 is a process flow in a second embodiment.
[Fig. 13] Fig. 13 is a diagram illustrating an example of information elements included in an UPLINK NAS TRANSPORT message.
[Fig. 14] Fig. 14 is a diagram illustrating a procedure in which the MME creates a list of SIPTO@LN capable LGWs. Description of Embodiments

Hereinafter, the best mode for carrying out the present invention will be described with reference to the drawings. In addition, in the present embodiment, as an example, an embodiment of a mobile communication system to which the present invention is applied will be described in detail with reference to the drawings.

### [1. First embodiment]

First, a first embodiment to which the present invention is applied will be described with reference to the drawings.

### [1.1 Overview of mobile communication system]

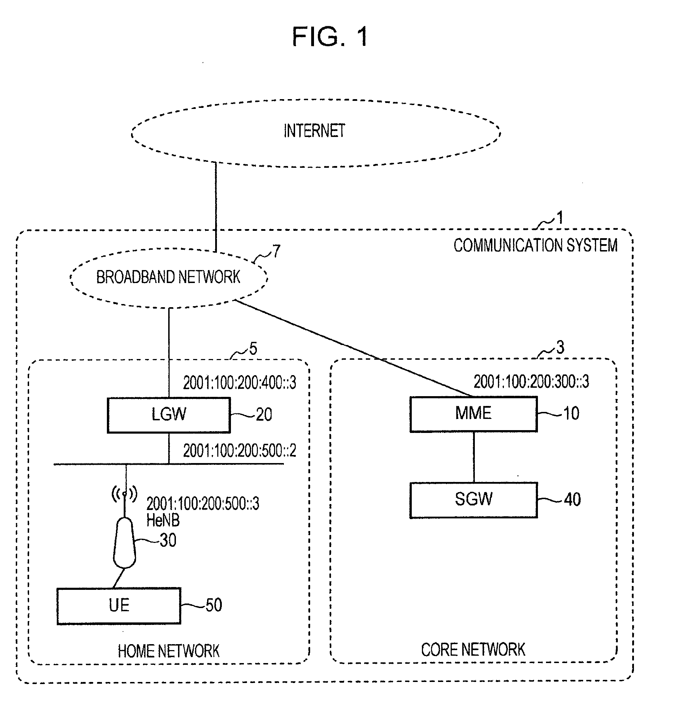

Fig. 1 is a diagram briefly illustrating a mobile communication system 1 of the present embodiment. As illustrated in Fig. 1, a mobile communication system 1 is configured to include a core network 3, a home network 5, and a broadband network 7.

The broadband network 7 is a wired access network for implementing broadband communication, and is constructed of, for example, an asymmetric digital subscriber line (ADSL), an optical fiber, and the like. However, without being limited thereto, the broadband network 7 may be a wireless access network such as worldwide interoperability for microwave access (WiMAX).

The core network 3 is a mobile communication network managed by a mobile communication provider, and is configured to include a mobility management entity (MME) 10, and an SGW 40.

The MME 10 is an entity that performs signaling, and is a position managing device that leads the position management of the mobile station device (UE 50) and the establishment procedure of PDN connection. The PDN connection is a logical path for transferring user IP packets, which is established between a PGW and the UE, for each UE, or between an LGW 20 and a UE in a home network. In a procedure of establishing the PDN connection, when it is determined to establish the PDN connection of SIPTO@LN, the MME 10 performs a GW selection process. In the GW selection, the MME selects a SIPTO@LN capable LGW.

The establishment of the PDN connection includes establishment of an EPS bearer and a wireless bearer, and each bearer can set a specific QoS level, with a communication speed and a bandwidth as parameters. In addition, for example, an address "2001:100:200:300::3" is assigned to the MME 10. In addition, the address assigned here is not limited to an IPv6 address, but may be an IPv4 address.

The SGW 40 is used for transfer transmission and reception of user data through the core network. In addition, the SGW 40 is a conventional device accommodated in the core network. Accordingly, description thereof will be omitted.

The home network 5 is a home network installed in a house, a corporate network installed in a corporation, or the like, and the home network 5 is configured to include an LGW 20, an HeNB 30, and a UE 50. Further, the home network 5 is connected to the broadband network 7.

The LGW 20 is a gateway device between the home network 5 and the broadband network 7, and has a function as a conventional broadband router such as an ADSL modem built-in router. In addition, for example, an address "2001:100:200:400::3" is assigned to the LGW 20 on the broadband network 7 side, and an address "2001:100:200:500::2" is assigned to the LGW 20 on the HeNB 30 side.

Here, the address (2001:100:200:400::3) assigned to the broadband side is referred to as an LGW@CN address (the address of the LGW on the core network side) in order to distinguish it from the address (2001:100:200:500::2) on the HeNB 30 side, and the address of the LGW 20 on the HeNB side (2001:100:200:500::2) is referred to as an LGW@LN address (the address of the LGW on the local network side). In addition, the address assigned here is not limited to an IPv6 address, but may be an IPv4 address.

The HeNB 30 is installed in the home network 5, and is capable of accommodating the UE 50, as a base station provided by the core network provider. Typically, the HeNB 30 is a base station of a 3GPP long term evolution (LTE) forming a femtocell. The address "2001:100:200:500::3" is assigned to the HeNB 30. In addition, the address assigned here is not limited to an IPv6 address, but may be an IPv4 address. In addition, the UE 50 is a mobile station device that can be accommodated in the HeNB 30 and the like.

### [1.2 Device configuration]

Subsequently, each device configuration will be briefly described with reference to the drawings.

### [1.2.1 Configuration of MME]

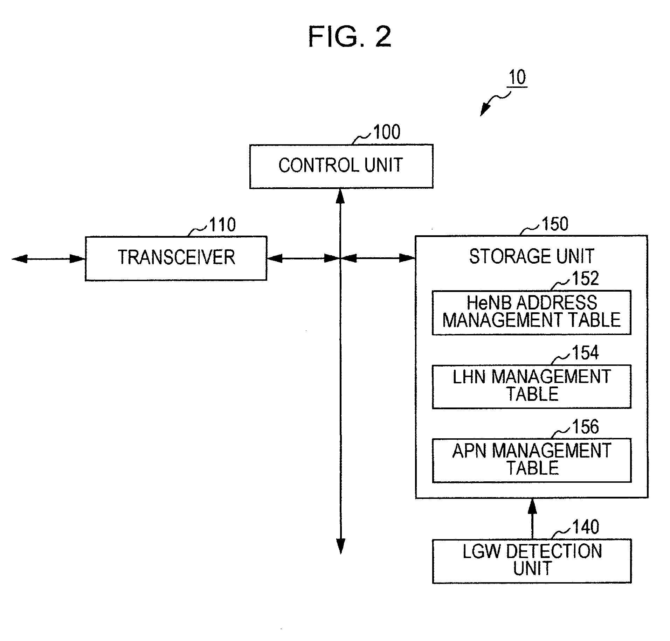

Fig. 2 shows the configuration of the MME 10 in the present embodiment. In the MME 10, a control unit 100 is connected to a transceiver 110, an LGW detection unit 140, and a storage unit 150 through a bus.

The control unit 100 is a functional unit that controls the MME 10. The control unit 100 implements various functions by reading and executing various programs stored in the storage unit 150.

The transceiver 110 is a functional unit that is connected to a router or a switch in a wired manner, and performs transmission and reception of packets. For example, the transceiver 110 performs transmission and reception of packets by Ethernet (registered mark) which is generally used as a connection scheme of a network.

The storage unit 150 is a functional unit that stores various programs and various pieces of data required for the operation of the MME 10. The storage unit 150 is configured with, for example, a semiconductor memory, a hard disk drive (HDD), and the like. Further, the storage unit 150 stores an HeNB address management table 152, an LHN management table 154, and an APN management table 156.

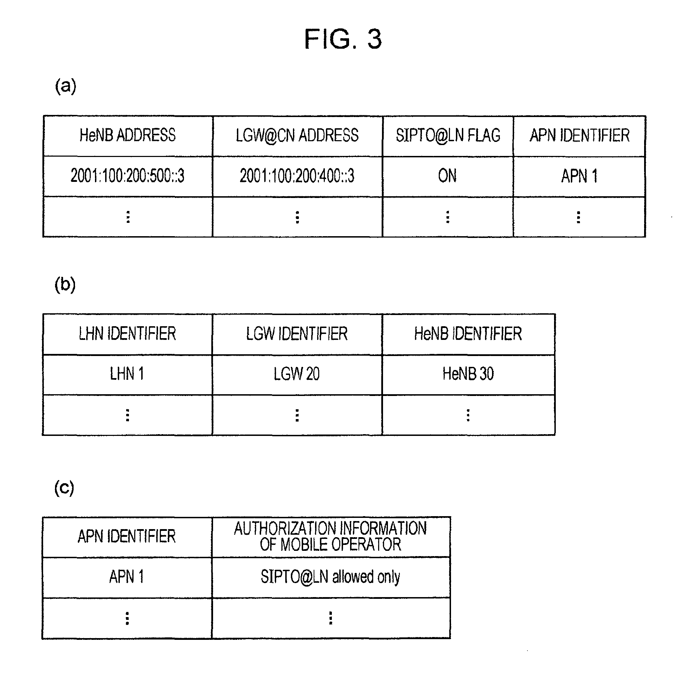

In the HeNB address management table 152, as illustrated in Fig. 3(a), the address of the HeNB 30 (for example, "2001:100:200:500::3") and the LGW@CN address (for example, "2001:100:200:400::3") of the LGW 20 are managed (stored) in association with each other.

Further, the HeNB address management table 152 stores a SIPTO@LN flag for managing the availability of the SIPTO@LN in the LGW 20. If the SIPTO@LN flag is "ON", it indicates that the SIPTO@LN is available, and if the flag is "OFF", it indicates that the SIPTO@LN is not available. For example, whether or not the SIPTO@LN is available in the LGW 20 may be determined by the presence or absence of a function of establishing the PDN connection of the SIPTO@LN. Otherwise, the LGW 20 has a setting of turning a function of SIPTO@LN ON/OFF, and the availability may be determined based on the ON/OFF setting by a provider.

Here, a plurality of HeNB addresses may be managed for a single LGW@CN address in the HeNB address management table 152,. Even if the plurality of HeNB addresses are managed, the LGW@CN address and the SIPTO@LN flag (ON/OFF) of the LGW 20 are managed for each HeNB address.

Further, an APN identifier available in the LGW 20 is managed in the HeNB address management table 152. The APN identifier indicates that the MME 10 can select the LGW 20 and establish the PDN connection, for the UE 50 connected by using the APN.

The LGW detection unit 140 determines the SIPTO@LN flag of the LGW 20 which is notified from the HeNB 30, and includes ON/OFF information of the SIPTO@LN flag of the LGW 20 in the HeNB address management table 152. Here, when the SIPTO@LN flag is not notified, the SIPTO@LN flag is set to "OFF" indicating that the LGW 20 cannot use the SIPTO@LN.

It is not possible to use another service such as local IP access (LIPA) with the SIPTO@LN flag shown here, and when detecting an LGW 20 capable of using the LIPA, information indicating whether the LIPA is ON or OFF is needed. The information does not indicate that the SIPTO@LN capable LGW 20 can always use the LIPA. Further, the information does not indicate that the LIPA capable LGW 20 can always use the SIPTO@LN. Further, the LGW 20 may use the SIPTO@LN and the LIPA in some cases.

As shown in Fig. 3(b), the LHN management table 154 is configured to include an LHN identifier, an LGW identifier, and an HeNB identifier. In the LHN management table 154 shown in Fig. 3(b), the LHN1 includes the LGW 20 and the HeNB 30, which indicates that the LGW 20 and the HeNB 30 belong to the LHN1. In addition, the LHN identifier is transmitted from the HeNB 30, and is managed in association with the LGW 20 in the LHN management table 154. Further, the LGW identifier may be represented as an IPv4 address or an IPv6 address. Further, the HeNB identifier may be represented as an IPv4 address or an IPv6 address.

The APN management table 156 is subscriber information which is managed for each UE, and as shown in Fig. 3(c), an APN identifier (for example, "APN1") and authorization information of a mobile communication provider (for example, "SIPTO@LN allowed only") are managed for each user.

Here, an access point name (APN) is connection destination information of a mobile communication provider, which is managed as shown in Fig. 3(c). It is necessary for the UE to establish a connection destination for each service (PDN) prior to communication, and it is possible to establish the connection destination of the PDN by notifying the MME of the APN during a PDN connection establishment procedure, in order to achieve the connection destination of the PDN.

The APN is associated with the authorization information of the mobile communication provider, and, for example, it is possible to use the SIPTO@LN in an APN which is associated with authorization information "SIPTO@LN allowed only". Here, when the APN is not associated with the authorization information "SIPTO@LN allowed only" and is associated with authorization information "SIPTO allowed SIPTO@LN", it is not possible to use the SIPTO@LN, but is possible to use the SIPTO@RN in the APN.

Further, there are a plurality of types of authorization information of a mobile communication provider, and the type is not the "SIPTO@LN allowed only", but may be "SIPTO allowed including SIPTO@LN", "the LIPA allowed", or "the LIPA conditional".

Further, it is not possible to use another service such as the LIPA with only the APN1 shown here, and when detecting an LGW 20 capable of using the LIPA, it is necessary to indicate the APN corresponding to the LIPA by using another APN. The information does not indicate that the SIPTO@LN capable LGW 20 can always use the LIPA. Further, the information does not indicate that the LIPA capable LGW 20 can always use the SIPTO@LN. Further, the LGW 20 may use the SIPTO@LN and the LIPA in some cases.

### [1.2.2 Configuration of LGW]

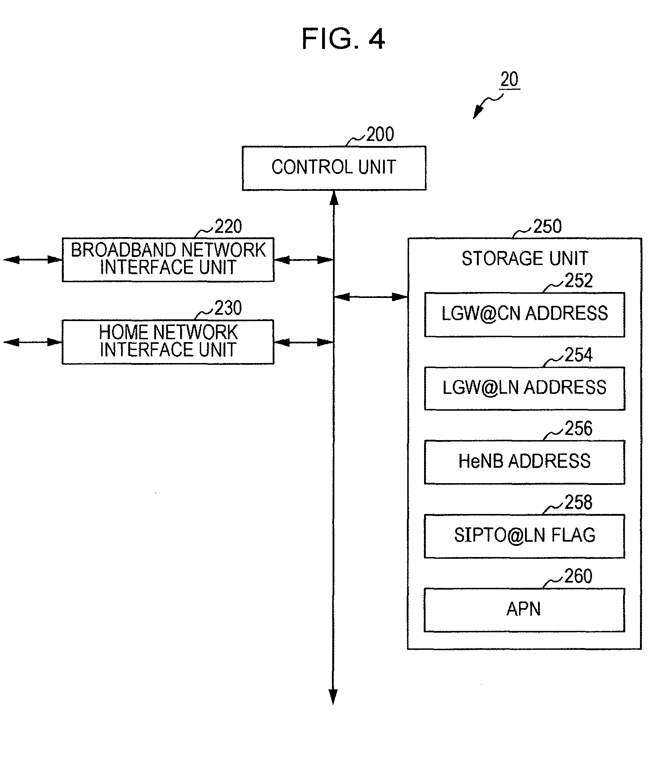

Subsequently, Fig. 4 illustrates the configuration of the LGW 20 of the present embodiment. In the LGW 20, a control unit 200 is connected to a broadband network interface unit 220, a home network interface unit 230, and a storage unit 250 through a bus.

The control unit 200 is a functional unit that controls the entire LGW 20. The control unit 200 implements various functions by reading and executing various programs stored in the storage unit 250, and is configured with, for example, central process unit (CPU) and the like.

The broadband network interface unit 220 is a network interface unit connected to the broadband network 7, receives a packet from the broadband network interface unit 220, and transmits the packet to the home network interface unit 230. Further, the broadband network interface unit 220 transmits the packet received from home network interface unit 230 to the broadband network interface unit 220.

The home network interface unit 230 is a network interface unit connected to the home network 5, and transmits packets to the broadband network interface unit 220, or conversely, the packet received by the broadband network interface unit 220 is transmitted to the home network interface unit 230.

The storage unit 250 is a functional block in which various programs and various pieces of data required for the operation of the LGW 20 are stored. The storage unit 250 is configured with, for example, a semiconductor memory, a hard disk drive, and the like.

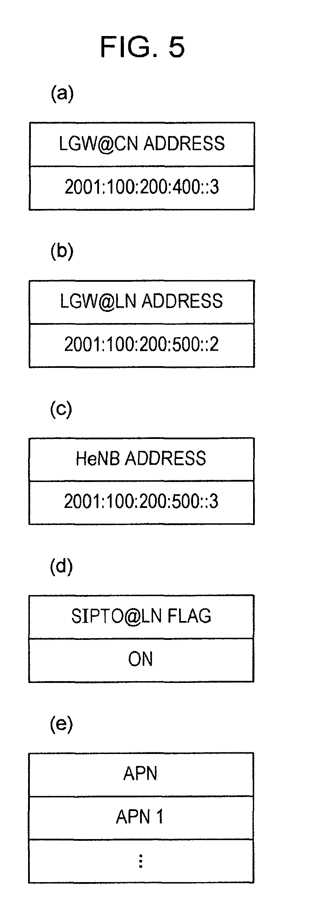

Further, the storage unit 250 stores an LGW@CN address 252, an LGW@LN address 254, an HeNB address 256, an ON/OFF of SIPTO@LN 258, and an APN 260. Fig. 5 shows an example of the LGW@CN address 252, the LGW@LN address 254, the HeNB address 256, the SIPTO@LN flag 258, and the APN 260.

As shown in Fig. 5(a), in the LGW@CN address 252, "2001:100:200:400::3" is managed as the address assigned to the interface on the broadband network side of the LGW. Here, the LGW@CN address 252 may be set in advance, or may be notified from a broadband network provider, a mobile communication provider, or the HeNB 30. Further, the IPv6 address is described, but an IPv4 address may be used.

As shown in Fig. 5(b), the LGW@LN address 254 includes "2001:100:200:500::2" as the address assigned to the interface on the broadband network side of the LGW. Here, the LGW@LN address 254 may be set in advance, or may be notified from the broadband network provider, the mobile communication provider, or the HeNB 30. Further, the IPv6 address is described, but an IPv4 address may be used.

As shown in Fig. 5(c), the HeNB address 256 includes "2001:100:200:500::3" as the address of the HeNB 30.

As shown in Fig. 5(d), the SIPTO@LN flag 258 is "ON". Further, the SIPTO@LN flag 258 may be set at the factory, or may be set in advance by the mobile communication provider.

It is not possible to use another service such as the LIPA with the SIPTO@LN flag shown here, and when detecting an LGW 20 capable of using the LIPA, information indicating whether the LIPA is ON or OFF is needed. The information does not indicate that the SIPTO@LN capable LGW 20 can always use the LIPA. Further, the information does not indicate that the LIPA capable LGW 20 can always use the SIPTO@LN. Further, the LGW 20 may use the SIPTO@LN and the LIPA in some cases.

As shown in Fig. 5(e), the APN 260 manages an APN (APN1) available in the LGW 20. The APN managed here is the same as the APN managed by the MME 10. Further, when the LGW 20 corresponds to a plurality of APNs, the plurality of APNs may be managed. Here, the APN 260 may be set at the factory, or may be set in advance by the mobile communication provider.

Further, only in the APN1 shown here, it is not possible to use another service such as the LIPA, and when detecting an LGW 20 capable of using the LIPA, it is necessary to indicate the APN corresponding to the LIPA by using another APN. The information does not indicate that the SIPTO@LN capable LGW 20 can always use the LIPA. Further, the information does not indicate that the LIPA capable LGW 20 can always use the SIPTO@LN. Further, the LGW 20 may use the SIPTO@LN and the LIPA in some cases.

### [1.2.3 Configuration of HeNB]

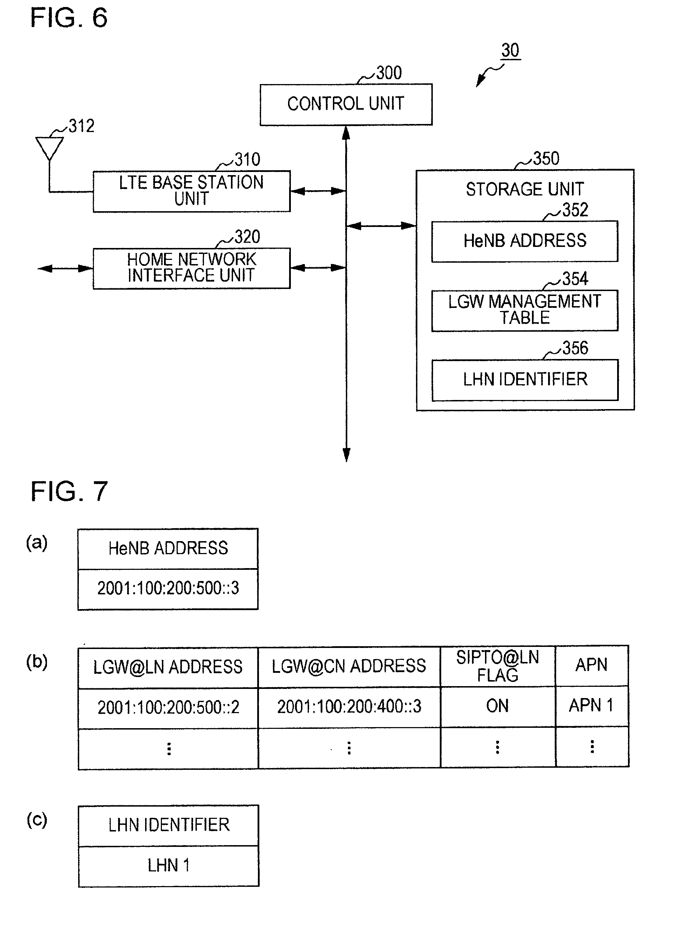

Fig. 6 shows the configuration of the HeNB 30 of the present embodiment. In the HeNB 30, a control unit 300 is connected to an LTE base station unit 310, a home network interface unit 320, and a storage unit 350 through a bus.

The control unit 300 is a functional unit that controls the entire HeNB 30. The control unit 300 implements various functions by reading and executing various programs stored in the storage unit 350, and is configured with, for example, central process unit (CPU) and the like.

The LTE base station unit 310 is a functional unit that serves as a base station of E-UTRAN and accommodates a UE. Further, the LTE base station unit 310 is connected to the external antenna 312.

The home network interface unit 320 is a functional unit that receives packets from the home network 5, and transfers the packets to the LTE base station unit 310 by rewriting the destination IP address.

Further, the home network interface unit 320 transfers the packets received from the LTE base station unit 310 to the home network interface unit 320.

The storage unit 350 is a functional unit that stores various programs and various pieces of data required for each operation of the HeNB 30, and the storage unit 350 stores an HeNB address 352, an LGW management table 354, and an LHN identifier 356. Fig. 7 shows the HeNB address 352, the LGW management table 354, and the LHN identifier 356.

As shown in Fig. 7(a), the HeNB address 352 includes the address of the HeNB 30 (for example, "2001:100:200:500::3"). Here, the HeNB address 352 may be set in advance, or may be notified from the broadband network provider, the mobile communication provider, and the LGW 20. Further, the IPv6 address is described, but an IPv4 address may be used.

As shown in Fig. 7(b), the LGW management table 354 manages the LGW@LN address of the LGW 20 connected to the HeNB 30, the LGW@CN address, and the SIPTO@LN flag in association with each other. Here, LGW@CN address and LGW@LN address may be set in advance, or may be notified from the broadband network provider, the mobile communication provider, or the LGW 20. Further, the IPv6 address is described, but an IPv4 address may be used.

Further, it is not possible to use another service such as the LIPA with the SIPTO@LN flag, and when detecting an LGW 20 capable of using the LIPA, information indicating whether the LIPA is ON or OFF is needed.

Further, the HeNB 30 receives the SIPTO@LN flag from the LGW 20, and manages it. Further, when the HeNB 30 is connected to a plurality of LGWs, a plurality of SIPTO@LN flags may be managed in the LGW management table 354.

Here, the LGW management table 354 may manage the LGW@LN address of the LGW 20 connected to the HeNB 30, the LGW@CN address, and the APN identifier in association with each other. Further, the LGW@CN address and the LGW@LN address may be set in advance, or may be notified from the broadband network provider, the mobile communication provider, and the LGW 20. Further, the IPv6 address is described, but an IPv4 address may be used.

Further, in the APN, it is not possible to use another service such as the LIPA, and when detecting an LGW 20 capable of using the LIPA, it is necessary to indicate the APN corresponding to the LIPA by using another APN. The information does not indicate that the SIPTO@LN capable LGW 20 can always use the LIPA. Further, the information does not indicate that the LIPA capable LGW 20 can always use the SIPTO@LN. Further, the LGW 20 may use the SIPTO@LN and the LIPA in some cases.

As shown in Fig. 7(c), the LHN identifier 356 is an identifier (LHN identifier) for identifying a local HeNB network (LHN), and the same LHN identifier is assigned to the HeNB 30 and the LGW 20, which belong to the same LHN. In addition, the LHN identifier may be manually set by the mobile communication provider in the HeNB 30.

### [1.3 Description of process]

Subsequently, the process in the present embodiment will be described. In the present embodiment, the LGW 20 notifies the HeNB 30 of the SIPTO@LN flag (information regarding ON/OFF of SIPTO@LN), and the HeNB 30, which detects that SIPTO@LN is supported, notifies the MME 10 of the SIPTO@LN flag.

In the present embodiment, the HeNB 30 receives the LGW@CN address of the LGW 20 and the SIPTO@LN flag of the LGW 20 in the LGW 20, from the LGW 20. Further, the HeNB 30 notifies the MME 10 of the LGW@CN address of the LGW 20 and the SIPTO@LN flag of the LGW 20, and thus the MME 10 can detect the SIPTO@LN capable LGW for each HeNB.

Here, it is not possible to detect that another service such as the LIPA can be used, with the SIPTO@LN flag, and when detecting an LGW 20 capable of using the LIPA, information indicating whether the LIPA is ON or OFF is needed.

The information does not indicate that the SIPTO@LN capable LGW 20 can always use the LIPA. Further, the information does not indicate that the LIPA capable LGW 20 can always use the SIPTO@LN. Further, the LGW 20 may use the SIPTO@LN and the LIPA in some cases.

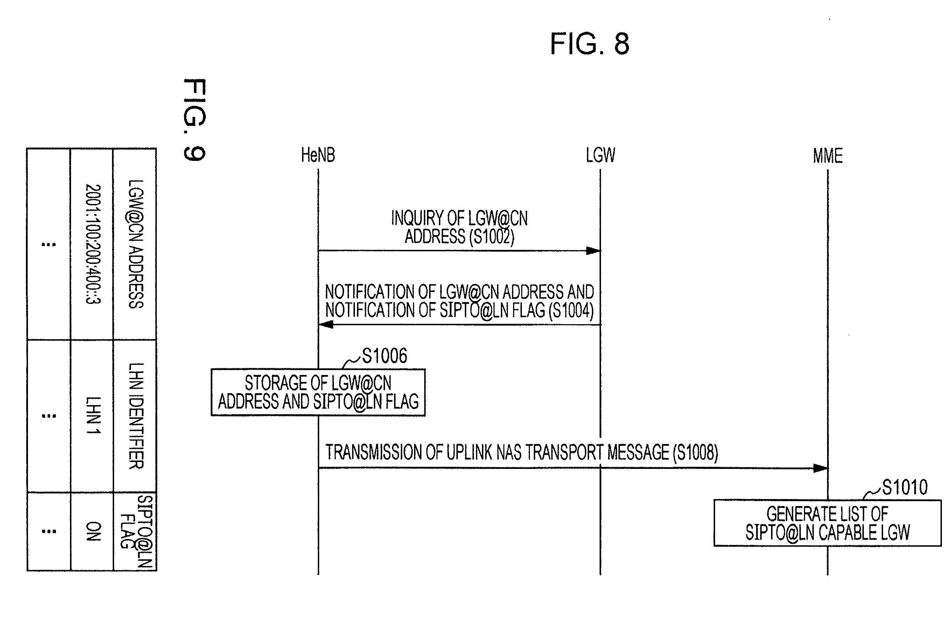

A series of procedures for detecting the SIPTO@LN capable LGW will be described with reference to Fig. 8.

In addition, the HeNB address of the HeNB 30 and the address of the LGW@LN of the LGW 20 can be achieved by using a method which is defined in advance, such as a local discovery procedure, and it is assumed that the transmission and reception of data between the HeNB 30 and the LGW 20 is possible.

After confirming that the transmission and reception of data between the HeNB 30 and the LGW 20 is possible, the HeNB 30 makes an inquiry about the LGW@CN address, to the LGW 20 (S1002). The LGW 20 that has received the inquiry about the LGW@CN address from the HeNB 30 performs notification of the LGW@CN address of the LGW 20 and the SIPTO@LN flag of the LGW 20 (S1004).

Here, the method of notifying the LGW@CN address and the SIPTO@LN flag is not limited to the method of making an inquiry to the LGW 20, and for example, the LGW 20 has registered in advance the LGW@CN address of the LGW and the information on the SIPTO@LN flag to a DNS server, and the HeNB 30 may make an inquiry to the DNS sever, with FQDN as a key, thereby allowing the LGW@CN address of the LGW 20 and information on the SIPTO@LN flag to be achieved.

Here, in the SIPTO@LN flag, it is not possible to notify another service such as the LIPA, and when notifying the HeNB 30 of the availability of the LIPA, it is necessary to notify information indicating whether the LIPA is ON or OFF. The information does not indicate that the SIPTO@LN capable LGW 20 can always use the LIPA. Further, the information does not indicate that the LIPA capable LGW 20 can always use the SIPTO@LN. Further, the LGW 20 may use the SIPTO@LN and the LIPA in some cases.

The HeNB 30 that receives the LGW@CN address stores the LGW@CN address and the SIPTO@LN flag in the LGW management table 354 (S1006). Here, when the HeNB 30 is connected to a plurality of LGWs, a plurality of LGW addresses are managed.

The HeNB 30 that stores the LGW@CN address and the SIPTO@LN flag of the LGW 20 transmits an UPLINK NAS TRANSPORT message to the MME 10 (S1008).

Thus, the HeNB 30 makes a request for the MME 10 to register information used for GW selection by the MME 10 when establishing the PDN connection for offload through the local network.

Fig. 9 shows information elements included in the UPLINK NAS TRANSPORT message. As shown in Fig. 9, the UPLINK NAS TRANSPORT message includes an LGW@CN address (for example, "2001:200:200:400::3"), an LHN identifier (for example, "LHN1"), and an SIPTO@LN flag (for example, "ON").

Here, the identifier which is set in advance in the HeNB 30 is used as the LHN identifier. In addition, when the HeNB 30 is connected to a plurality of LGWs, the SIPTO@LN flags corresponding to the plurality of LGW addresses and LGW addresses may be notified.

Here, in the SIPTO@LN flag, it is not possible to notify another service such as the LIPA, and when including the availability of the LIPA in the UPLINK NAS TRANSPORT message, it is necessary to include information indicating whether the LIPA is ON or OFF. The information does not indicate that the SIPTO@LN capable LGW 20 can always use the LIPA. Further, the information does not indicate that the LIPA capable LGW 20 can always use the SIPTO@LN. Further, the LGW 20 may use the SIPTO@LN and the LIPA.

The MME 10 that has received the LGW@CN address and the information of the SIPTO@LN flag of the LGW 20 from the HeNB 30 manages the list of SIPTO@LN capable LGWs as the HeNB address management table 152, by associating the transmission source IP address of the HeNB 30 with the LGW@CN address and the SIPTO@LN flag of the LGW 20 which have been transmitted from the LGW 20 (S1010).

Here, it is not possible to use another service such as the LIPA with the SIPTO@LN flag, and when managing the availability of the LIPA, it is necessary to manage information indicating whether the LIPA is ON or OFF. The information does not indicate that the SIPTO@LN capable LGW 20 can always use the LIPA. Further, the information does not indicate that the LIPA capable LGW 20 can always use the SIPTO@LN. Further, the LGW 20 may use the SIPTO@LN and the LIPA in some cases.

According to the above procedure, the HeNB 30 performs notification of the SIPTO@LN flag in the LGW 20, and the MME 10 can detect the SIPTO@LN capable LGW.

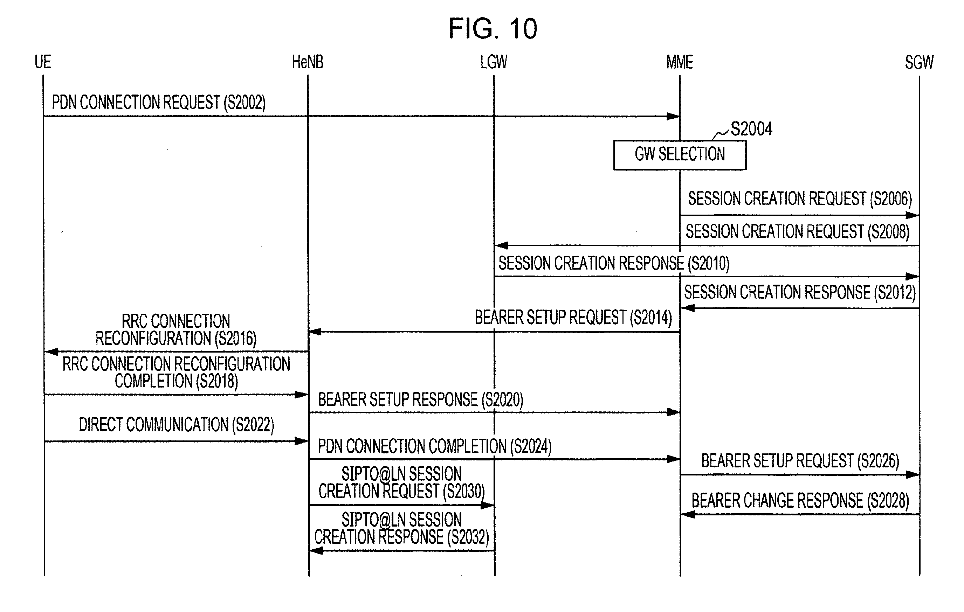

Subsequently, Fig. 10 shows a process in which the MME 10 selects a SIPTO@LN capable LGW during the PDN connection procedure, by the SIPTO@LN capable LGW detected above.

First, the UE 50 transmits a PDN connection request, including the APN1, to the MME 10 (S2002). The included APN1 is associated with the authorization information "SIPTO@LN allowed only" in the MME. Further, the PDN connection request is transmitted through the HeNB 30. Thus, the UE 50 makes a request for the establishment of a PND connection used in the SIPTO@LN.

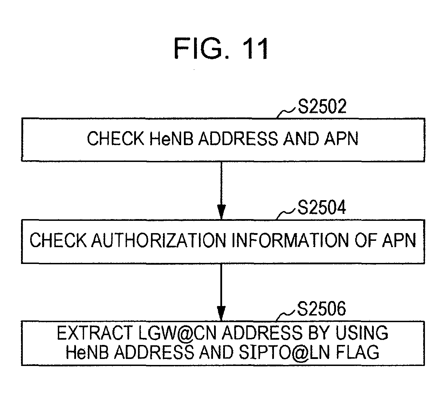

The MME 10 that receives the PDN connection request from the UE 50 performs GW selection (S2004). The GW selection of the MME 10 will be described with reference to Fig. 11. First, the MME 10 checks the HeNB 30 and the APN, which are included in the PDN connection request (S2502).

Subsequently, the MME 10 checks the APN management table 156 based on the APN (APN1) included in the PDN connection request of the UE 50, and checks that "SIPTO@LN allowed only" is allowed as the authorization information of the mobile communication provider, in the APN1 (S2504). Here, the MME 10 may check in advance the authorization information of a broadband provider or the authorization information of the UE, which is managed in a server in the core network as the authorization information corresponding to the APN1.

Further, the MME 10 extracts the LGW@CN address (for example, "2001:100:200:400::3") which is managed as "ON", in the HeNB address and the SIPITO@LN flag of the HeNB 30 which are received through the PDN connection request, in the HeNB address management table 152 (S2506). Here, when a plurality of LGWs 30 are extracted, the MME 10 can select a certain LGW30.

In addition, when the LGW@CN address cannot be detected, the MME 10 determines that PDN connection is not available in the SIPTO@LN, and transmits a notification indicating that the PDN connection cannot be established, to the UE 50.

Referring back to Fig. 10, subsequently, the MME 10 transmits a session creation request to the SGW 40 (S2006). At this time, the MME 10 includes the LGW@CN address and information indicating the SIPTO@LN which are detected in S2004 during the session creation request. Here, the APN notified from the UE 50 may be included as information indicating the SIPTO@LN.

The SGW 40 that has received the session creation request transmits the session creation request to the LGW 20 corresponding to the LGW@CN address included in the session creation request (S2008). At this time, the SGW 40 includes information indicating the SIPTO@LN notified from the MME 10, in the session creation request. The LGW 20 that has received the session creation request from the SGW 40 determines whether or not the SIPTO@LN is available, based on the information indicating the SIPTO@LN.

When the SIPTO@LN is available, the LGW 20 transmits a session creation response including information indicating that the SIPTO@LN is available, to the SGW 40 (S2010). In addition, when the SIPTO@LN is not available, the LGW 20 includes information indicating that the SIPTO@LN is not available in the session creation response.

The SGW 30 that has received the session creation response from the LGW 20 transmits the session creation response to the MME 10 (S2012). At this time, the LGW 20 includes information indicating whether or not the SIPTO@LN is available.

The MME 10 which has received the session creation response from the SGW 40 checks information indicating whether or not the LGW 20 can use the SIPTO@LN. If the LGW 20 can use the SIPTO@LN, the MME 10 transmits a bearer setup request to the HeNB 30 (S2014). In addition, at this time, the MME 10 includes information indicating the SIPTO@LN and the LGW@CN address detected in S2004 in the bearer setup request. Here, information indicating the SIPTO@LN may be an APN.

The HeNB 30 that has received the bearer setup request from the MME 10 transmits an RRC connection reconfiguration to the UE 50 (S2016). The UE 50 that has received the RRC connection reconfiguration from the HeNB 30 reconfigures RRC connection in the HeNB 30 which has transmitted the RRC connection reconfiguration. The UE 50 that has completed the RRC connection reconfiguration transmits an RRC connection reconfiguration completion to the HeNB 30 (S2018).

The HeNB that has received the RRC connection reconfiguration completion transmits a bearer setup response to the MME 10 (S2020).

Further, the UE 50 performs direct communication in order to check whether to perform communication (SS022). The HeNB 30 receiving direct communication transmits the PDN connection completion to the MME 10 (S2024). The MME 10 that has received the PDN connection completion transmits the bearer setup request to the SGW 40 (S2026). In addition, here, the bearer setup request is a message for notifying that the PDN connection has been completed between the UE 50 and the LGW 20. The SGW 40 that has received the bearer setup request checks that the PDN connection has been completed between the UE 50 and the LGW 20, and returns a bearer change response to the MME 10 (S2028).

Further, the HeNB 30 transmits an SIPTO@LN session creation request to the LGW 20, based on information indicating the SIPTO@LN of the bearer setup request received in S3014 (S2030). The LGW 20 that has received the SIPTO@LN session creation request from the HeNB 30 performs a session creation for the HeNB 30. The LGW 20 that has checked that the session creation request has been completed transmits the SIPTO@LN session creation response to the HeNB 30 (S2032).

According to the above procedure, it is possible to complete the PDN connection procedure of the SIPTO@LN and to establish the PDN connection of the SIPTO@LN between the UE 50 and the LGW 20.

Here, the authorization information which is set in the APN indicates that the authorization information "SIPTO allowed including SIPTO@LN" or "SIPTO@LN allowed only" can be set, SIPTO@RN as well as SIPTO@LN are available in the APN in which "SIPTO allowed including SIPTO@LN" is set, and only SIPTO@LN is allowed in "SIPTO@LN allowed only".

In addition, in the APN in which "SIPTO allowed including SIPTO@LN" is set, the MME 10 can arbitrarily select not only a SIPTO@LN capable LGW 20 but also a SIPTO@RN possible TOF, during the GW selection.

During the GW selection process, the MME 10 can select the SIPTO@LN capable LGW, based on the LGW address notified from the HeNB, the SIPTO@LN flag, the LGW address, the HeNB address of the HeNB when the notifying the SIPTO@LN flag, the APN included in the PDN connection request from the UE in the PDN connection procedure, and the HeNB address of the HeNB through which the PDN connection request is transmitted from the UE to the MME.

Further, during the GW selection process, the MME 10 can select the SIPTO@LN capable LGW, such that it is possible to complete the PDN connection establishment procedure for establishing the PDN connection of the SIPTO@LN.

Further, since the PDN connection of the SIPTO@LN is established, the user (UE) is able to initiate data communication using the SIPTO@LN.

Further, since the PDN connection of the SIPTO@LN is established, the mobile communication provider is able to initiate data communication using the SIPTO@LN.

### [1.4 Modification]

In the embodiments described above, the HeNB 30 receives the SIPTO@LN flag from the LGW 20, and transmits it to the MME 10, but without being limited to the SIPTO@LN flag, information (flag) indicating whether the LIPA is ON or OFF may be notified.

In other words, the LGW 20 sets whether or not the LIPA can be used; and in a case of setting in which the LIPA can be used, "ON" is set, and in a case of setting in which the LIPA cannot be used, "OFF" is set.

Here, in the information indicating whether the LIPA is ON or OFF, it is not possible to use another service such as SIPTO@LN, and when setting an LGW 20 capable of using the SIPTO@LN, information indicating whether the LIPA is ON or OFF is needed.

The information does not indicate that the LIPA capable LGW 20 can always use the SIPTO@LN. Further, the information does not indicate that the SIPTO@LN capable LGW 20 can always use the LIPA. Further, the LGW 20 may use the LIPA and the SIPTO@LN in some cases.

The LGW 20 which has set the ON/OFF of the LIPA transmits the LGW@CN address and the ON/OFF information of the LIPA to the HeNB 30. The HeNB that has received the LGW@CN address of the LGW 20 and the ON/OFF information of the LIPA transmits the LGW@CN address of the LGW and the ON/OFF information of the LIPA as well as the LHN identifier, in the UPLINK NAS TRANSPORT message.

Here, in the information indicating whether the LIPA is ON or OFF, it is not possible to notify another service such as SIPTO@LN, and when notifying the availability of the SIPTO@LN to the HeNB 30, it is necessary to notify information indicating whether the SIPTO@LN (SIPTO@LN flag) is ON or OFF. The information does not indicate that the LIPA capable LGW 20 can always use the SIPTO@LN.

Further, the information does not indicate that the SIPTO@LN capable LGW 20 can always use the LIPA. Further, the LGW 20 may use the LIPA and the SIPTO@LN in some cases.

In the UPLINK NAS TRANSPORT message from the HeNB 30, the MME that has received the LHN identifier, the LGW@CN address, and the ON/OFF (ON) of the LIPA manages the HeNB address, the LGW@CN address, and the LHN identifier as the LIPA capable LGW.

Here, in the information indicating whether the LIPA is ON or OFF, it is not possible to use another service such as SIPTO@LN, and when managing the availability of the SIPTO@LN, it is necessary to manage information indicating whether the SIPTO@LN (SIPTO@LN flag) is ON or OFF. The information does not indicate that the LIPA capable LGW 20 can always use the SIPTO@LN.

Further, the information does not indicate that the SIPTO@LN capable LGW 20 can always use the LIPA. Further, the LGW 20 may use the LIPA and the SIPTO@LN in some cases.

According to the above procedure, the LGW 20 detects the ON/OFF flag of the LIPA, and thus the MME 10 can select the LIPA capable LGW.

Further, in the PDN connection establishment procedure, the MME 10 can select the LIPA capable LGW during the GW selection process.

Further, during the GW selection process, the MME 10 can detect the LIPA capable LGW, and thus it is possible to establish the PDN connection for establishing the PDN connection of the LIPA.

Further, since the PDN connection of the SIPTO@LN is established, the user (UE) is able to initiate data communication using the LIPA.

Further, the mobile communication provider is able to initiate data communication using the LIPA, by establishing the PDN connection of the LIPA.

### [2. Second embodiment]

Subsequently, a second embodiment will be described. The SIPTO@LN flag is notified in the UPLINK NAS TRANSPORT message from the HeNB 30 to the MME 10 in the first embodiment, but the MME 10 detects that the LGW 20 supports the SIPTO@LN by notifying the APN from the HeNB 30 to the MME 10 in the second embodiment.

Here, with respect to the APN notified to the HeNB 30 by the LGW 20, the APN supported by the LGW 20 is set in advance, and the LGW notifies the HeNB 30 of the APN which has been set. Further, the HeNB 30 notifies the MME 10 of the APN supported by the LGW 20, by using the APN received from the LGW 20.

In addition, the availability of the SIPTO@LN of the LGW 20 is notified to the MME 10 by using the new information element SIPTO@LN flag in the first embodiment, but the identifier such as the APN that has generally been used in the PDN connection establishment procedure is notified in the second embodiment.

Further, the authorization information for the SIPTO@LN is managed by the MME, and if the SIPTO@LN is allowed in the authorization information corresponding to the APN, the APN is included in the SIPTO@LN capable LGW list as the SIPTO@LN capable LGW.

Here, the authorization information which is set in the APN indicates that the authorization information "SIPTO allowed including SIPTO@LN" or "SIPTO@LN allowed only" can be set, SIPTO@RN as well as SIPTO@LN are available in the "SIPTO allowed including SIPTO@LN", and only SIPTO@LN is allowed in "SIPTO@LN allowed only".

In addition, only in one APN, it is not possible to indicate another service such as the LIPA, and when indicating the LGW 20 capable of using the LIPA, it is necessary to indicate an APN corresponding to the LIPA as another APN. The information does not indicate that SIPTO@LN capable LGW 20 can always use the LIPA. Further, the information does not indicate that the LIPA capable LGW 20 can always use SIPTO@LN. Further, the LGW 20 may use the SIPTO@LN and the LIPA in some cases.

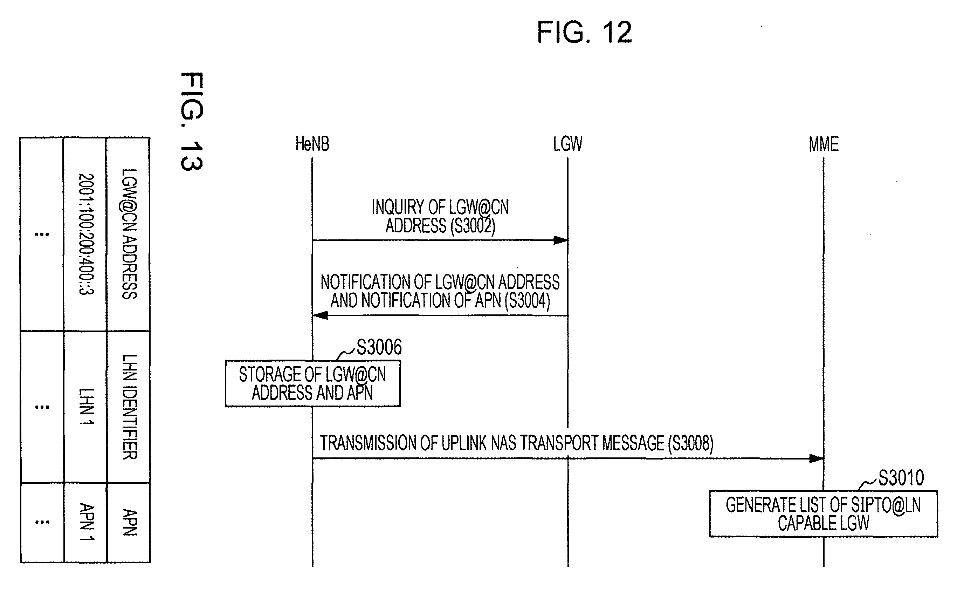

Hereinafter, a series of procedures will be described with reference to Fig. 12 in which in order for the HeNB 30 to create the SIPTO@LN capable LGW list, the LGW@CN address and the supported APN are notified from the LGW 20 to the HeNB 30, the HeNB receives the LGW@CN address and the supported APN from the LGW and transmits the LHN identifier, the LGW@CN address, and the APN to the MME, and thus the MME 10 detects the SIPTO@LN capable LGW connected to the HeNB 30.

In addition, since the mobile communication system in Fig. 1 described in the first embodiment can similarly be used for the mobile communication system of the present embodiment, the detailed description thereof will be omitted. Further, since the MME 10 in the core network 3, the LGW 20 and the HeNB 30 in the home network 5 respectively have the same configurations as those of first embodiment, the detailed description thereof will be omitted.

In addition, it is assumed that the HeNB address of the HeNB 30 and the address of the LGW@LN of the LGW 20 can be achieved by using a previously defined method such as the local discovery method, and data can be transmitted and received between the HeNB 30 and the LGW 20.

After confirming that the transmission and reception of data between the HeNB 30 and the LGW 20 is possible, the HeNB 30 makes an inquiry about the LGW@CN address, to the LGW 20 (S3002). The LGW 20 that has received the inquiry about the LGW@CN address from the HeNB 30 performs notification of the LGW@CN address (for example, "2001:100:200:400::3") of the LGW 20 and APN (APN1) supported by the LGW 20 (S3004). Here, the APN1 is an identifier of the APN supported by the LGW 20.

Further, when the LGW 20 supports a plurality of APNs, a plurality of APNs may be notified. Further, the method of notifying the LGW@CN address and the APN supported by the LGW 20 is not limited to a method of making an inquiry to the LGW 20, and for example, the LGW 20 has registered in advance the LGW@CN address of the LGW 20 and the information on the APN to the DNS server, and the HeNB 30 makes an inquiry to the DNS sever, thereby allowing the LGW@CN address of the LGW 20 and the information on the APN to be achieved.

Here, only in one APN, it is not possible to indicate another service such as the LIPA, and when indicating the LGW 20 capable of using the LIPA, it is necessary to indicate an APN corresponding to the LIPA as another APN. The information does not indicate that the SIPTO@LN capable LGW 20 can always use the LIPA. Further, the information does not indicate that the LIPA capable LGW 20 can always use the SIPTO@LN. Further, the LGW 20 may use the SIPTO@LN and the LIPA in some cases.

The HeNB 30 that has received the LGW@CN address stores the LGW@CN address and the information on the APN in the LGW management table 354 (S3006). Here, when the LGW 20 corresponds to a plurality of APNs, the HeNB 30 may store the plurality of APNs. Further, when the HeNB 30 is connected to a plurality of LGWs, the HeNB 30 manages a plurality of LGW addresses and APNs.

Here, only in one APN, it is not possible to indicate another service such as the LIPA, and when indicating the LGW 20 capable of using the LIPA, it is necessary to manage an APN corresponding to the LIPA as another APN. The information does not indicate that the SIPTO@LN capable LGW 20 can always use the LIPA. Further, the information does not indicate that the LIPA capable LGW 20 can always use the SIPTO@LN. Further, the LGW 20 may use the SIPTO@LN and the LIPA in some cases.

The HeNB 30 that has stored the LGW@CN address of the LGW 20 and the information on the APN transmits the UPLINK NAS TRANSPORT message to the MME 10 (S3008).

Thus, the HeNB 30 makes a request for the MME 10 to register information used for GW selection by the MME 10 when establishing the PDN connection for offload through the local network.

Fig. 13 shows information elements included in the UPLINK NAS TRANSPORT message. The UPLINK NAS TRANSPORT message includes an LGW@CN address (for example, "2001:100:200:400::3"), an LHN identifier (for example, "LHN1"), and an APN(for example, "APN1"). Here, the LHN identifier which is set in advance in the HeNB is used. Further, when the LHN identifier corresponds to a plurality of APNs, the LGW 20 may notify a plurality of APNs. Further, when the HeNB 30 is connected to a plurality of LGWs, the LGW 20 may notify APN corresponding to a plurality of LGW@CN addresses and LGW addresses.

Here, only in one APN, it is not possible to indicate another service such as the LIPA, and when indicating the LGW 20 capable of using the LIPA, it is necessary to include an APN corresponding to the LIPA as another APN. The information does not indicate that the SIPTO@LN capable LGW 20 can always use the LIPA. Further, the information does not indicate that the LIPA capable LGW 20 can always use the SIPTO@LN. Further, the LGW 20 may use the SIPTO@LN and the LIPA in some cases.

The MME 10 that has received the LGW@CN address and the APN supported by the LGW 20 from the HeNB 30 manages the list of SIPTO@LN capable LGWs as the HeNB address management table 152, by associating the IP address of the HeNB 30 with the LGW@CN address and the APN supported by the LGW 20 which have been transmitted from the HeNB 20 (S2010).

Here, only in one APN, it is not possible to indicate another service such as the LIPA, and when indicating the LGW 20 capable of using the LIPA, it is necessary to manage an APN corresponding to the LIPA as another APN. The information does not indicate that the SIPTO@LN capable LGW 20 can always use the LIPA. Further, the information does not indicate that the LIPA capable LGW 20 can always use the SIPTO@LN. Further, the LGW 20 may use the SIPTO@LN and the LIPA in some cases.

According to the above procedure, the HeNB 30 performs the notification of APN to the LGW 20, the MME 10 can detect the corresponding LGW for each APN.

Further, the method shown in Fig. 10 in the first embodiment can similarly be used for the process in which the MME 10 selects the SIPTO@LN capable LGW by using the SIPTO@LN capable LGW detected above in the PDN connection procedure.

According to the above procedure, the MME 10 can select the LGW corresponding to the APN, for the APN included in the PDN connection establishment procedure, by using the corresponding LGW for each APN, during the GW selection process.

Here, the authorization information which is set in the APN indicates that the authorization information "SIPTO allowed including SIPTO@LN" or "SIPTO@LN allowed only" can be set, SIPTO@RN as well as SIPTO@LN are available in the APN in which "SIPTO allowed including SIPTO@LN" is set, and only SIPTO@LN is allowed in "SIPTO@LN allowed only".

In addition, in the APN in which "SIPTO allowed including SIPTO@LN" is set, the MME 10 can arbitrarily select not only a SIPTO@LN capable LGW 20 but also a SIPTO@RN possible TOF, during the GW selection.

During the GW selection process, the MME 10 can select the SIPTO@LN capable LGW, by using the LGW address and the information of APN notified from the HeNB, the LGW address and the HeNB address of the HeNB when notifying the information of APN, the APN included in the PDN connection request from the UE in the PDN connection procedure, and the HeNB address of the HeNB through which the PDN connection request is transmitted from the UE to the MME.

Here, if authorization information for allowing the SIPTO@LN ("SIPTO allowed including SIPTO@LN" or "SIPTO@LN allowed only") is set for the APN, the PDN connection of the SIPTO@LN is established, and thus the user (UE) is able to initiate data communication using the SIPTO@LN.

Further, if authorization information for allowing the SIPTO@LN ("SIPTO allowed including SIPTO@LN" or "SIPTO@LN allowed only") is set for the APN, the PDN connection of the SIPTO@LN is established, and thus the mobile communication provider is able to initiate data communication using the SIPTO@LN.

### [3. Third embodiment]

In the first embodiment and the second embodiment, the LGW@CN address and the information indicating the availability of the SIPTO@LN (SIPTO@LN flag or APN) are directly transmitted from the LGW to the MME through the HeNB, however, in the third embodiment, the LGW@CN address and the information indicating the availability of the SIPTO@LN are directly transmitted from the LGW to the MME.

Here, it is not possible to detect that another service such as the LIPA can be used with the SIPTO@LN flag, and when detecting an LGW 20 capable of using the LIPA, information indicating whether the LIPA is ON or OFF is needed. The information does not indicate that the SIPTO@LN capable LGW 20 can always use the LIPA. Further, the information does not indicate that the LIPA capable LGW 20 can always use the SIPTO@LN. Further, the LGW 20 may use the SIPTO@LN and the LIPA in some cases.

Further, in the third embodiment, the HeNB transmits the HeNB address to the LGW, and the LGW transmits the HeNB address to the MME, such that the MME detects the LGW connected to the HeNB.

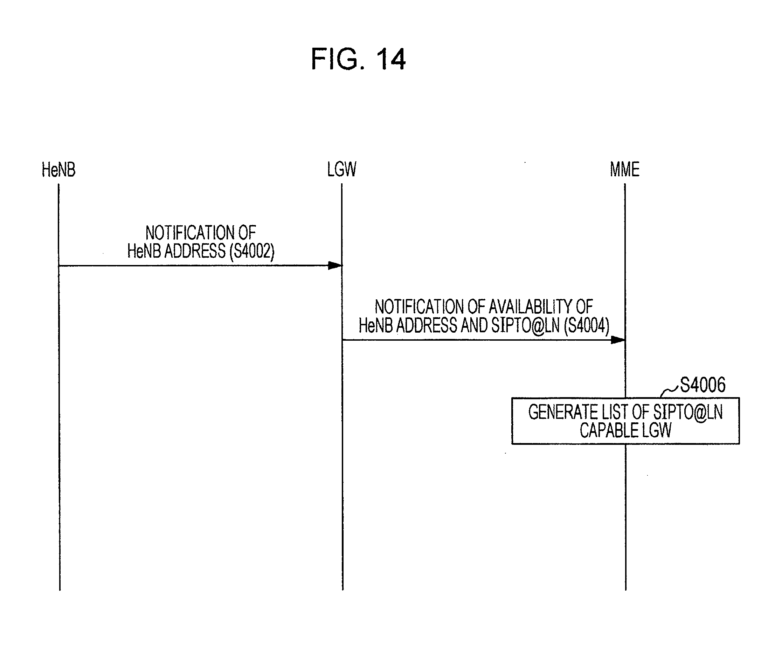

A procedure in which a MME detects a SIPTO@LN capable LGW will be described with reference to Fig. 14.

First, the HeNB 30 notifies the LGW 20 connected to the HeNB 30 of the HeNB address (S4002). Here, there are various methods of detecting the LGW 20 connected to the HeNB 30, and as FQDN, it is possible to acquire the LGW 20
by setting in advance a name for detecting the LGW 20 and making an inquiry of the name to the DNS.

The LGW 20 that has received the HeNB address from the HeNB 30 transmits the HeNB address (2001:100:200:500::3) of the HeNB 30 and the SIPTO@LN flag (ON) of the LGW 20 (S4004).

Thus, the HeNB 30 makes a request for the MME 10 to register information used for GW selection by the MME 10 when establishing the PDN connection for offload through the local network.

Here, the method of notifying the HeNB address and the SIPTO@LN flag is not limited to a direct transmission method to the MME 10, and for example, the LGW 20 has registered in advance the HeNB address and the LGW@CN address of the LGW and the information on the SIPTO@LN flag to the DNS server, and the MME 10 may achieve the HeNB 30, the LGW@CN address of the LGW 20, and information on the SIPTO@LN flag, by making an inquiry to the DNS sever.

Further, it is not possible to notify another service such as the LIPA with the SIPTO@LN flag, and when notifying the HeNB 30 of the availability of the LIPA, it is necessary to notify information indicating whether the LIPA is ON or OFF.

The information does not indicate that the SIPTO@LN capable LGW 20 can always use the LIPA. Further, the information does not indicate that the LIPA capable LGW 20 can always use the SIPTO@LN. Further, the LGW 20 may use the SIPTO@LN and the LIPA in some cases.

The MME 10 that has received the HeNB address form the LGW 20 and the SIPTO@LN flag of the LGW 20 from the LGW 20 manages the list of SIPTO@LN capable LGWs as the HeNB address management table 152, by associating the HeNB address and information on the SIPTO@LN flag of the LGW 20 which have been transmitted from the LGW 20 (S4006).

Here, it is not possible to use another service such as the LIPA with the SIPTO@LN flag, and when managing the availability of the LIPA, it is necessary to manage information indicating whether the LIPA is ON or OFF. The information does not indicate that the SIPTO@LN capable LGW 20 can always use the LIPA. Further, the information does not indicate that the LIPA capable LGW 20 can always use the SIPTO@LN. Further, the LGW 20 may use the SIPTO@LN and the LIPA in some cases.

According to the above procedure, the HeNB 30 notifies the LGW 20 of the SIPTO@LN flag, such that the MME 10 can detect the SIPTO@LN capable LGW.

In addition, the description has been made by using the SIPTO@LN flag as information indicating the availability of SIPTO@LN, but the APN may be used as the information indicating the availability of SIPTO@LN.

Further, the method shown in Fig. 10 in the first embodiment can similarly be used for the process in which the MME 10 selects the SIPTO@LN capable LGW by using the SIPTO@LN capable LGW detected above in the PDN connection procedure.

According to the above procedure, it is possible to complete the PDN connection procedure of the SIPTO@LN and to establish the PDN connection of the SIPTO@LN between the UE 50 and the LGW 20.

During the GW selection process, the MME 10 can select the SIPTO@LN capable LGW, by using the HeNB address notified from the LGW, the information on the SIPTO@LN flag, the HeNB address, the LGW address of the LGW when notifying the information on the SIPTO@LN flag, the APN included in the PDN connection request from the UE in the PDN connection procedure, the HeNB address of the HeNB through which the PDN connection request is transmitted from the UE to the MME.

Further, during the GW selection process, the MME 10 can select the SIPTO@LN capable LGW, and thus the PDN connection establishment procedure for establishing the PDN connection of the SIPTO@LN can be completed.

Further, since the PDN connection of the SIPTO@LN is established, the user (UE) is able to initiate data communication using the SIPTO@LN.

Further, since the PDN connection of the SIPTO@LN is established, the mobile communication provider is able to initiate data communication using the SIPTO@LN.

### [3. Modification]

Hitherto, the embodiments of the present invention have been described in detail with reference to the drawings, embodiments of the invention, but the specific configuration is not intended to be limited to the embodiments, the design and the like without departing from the scope of the invention is included in the claims.

Further, the program executed in each device in the embodiment is a program for controlling a CPU (a program causing a computer to function) so as to implement functions of the embodiments described above. Then, information treated in the devices is temporarily accumulated in a temporary storage device (for example, a RAM) during the process, stored in a storage device such as various ROMs or HDD, and read as necessary so as to be modified and rewritten.

Here, a recording medium for storing a program may be any of a semiconductor medium (for example, a ROM, a nonvolatile memory card, and the like), an optical recording medium and an magneto-optical recording medium (for example, a digital versatile disc (DVD), a magneto optical disc (MO), mini disc (MD), a compact disc (CD), a BD, and the like), a magnetic recording medium (for example, a magnetic tape, a flexible disk, and the like). Further, the functions of the embodiment described above are not implemented only by executing the loaded program, but the functions of the present invention may be implemented by processing the operating system or other application programs in cooperation with each other, based on the instruction of the program, in some cases.

Further, when the program is distributed in a market, the program can be distributed by storing the program in a portable recording medium, or transferred to a server computer which his connected through a network such as the Internet. In this case, of course, the storage device of the server computer is also included in the present invention.

Further, some or all of the devices of the embodiments described above may typically be implemented by large scale integration (LSI) as an integrated circuit. Respective functional blocks of respective devices may be formed into individual chips, or formed into a chip by integrating some or all of the functions. Further, an integrated circuit technology is not limited to the LSI, but may be implemented as a dedicated circuit or a general processor. Further, when an integrated circuit technology replacing the LSI as a result of advances in the semiconductor technology emerges, of course, it is possible to use the integrated circuit according to the technology.

### Reference Signs List

- 1: MOBILE COMMUNICATION SYSTEM
- 3: CORE NETWORK
- 5: HOME NETWORK
- 7: BROADBAND NETWORK
- 100: CONTROL UNIT
- 110: TRANSCEIVER
- 140: LGW DETECTION UNIT
- 150: STORAGE UNIT
- 152: HeNB ADDRESS MANAGEMENT TABLE
- 154: LHN MANAGEMENT TABLE
- 156: APN MANAGEMENT TABLE
- 200: CONTROL UNIT
- 220: BROADBAND NETWORK INTERFACE UNIT
- 230: HOME NETWORK INTERFACE UNIT
- 240: OFF SWITCHING UNIT
- 250: STORAGE UNIT
- 252: LGW@CN ADDRESS
- 254: LGW@LN ADDRESS
- 256: HeNB ADDRESS
- 300: CONTROL UNIT
- 310: LTEBASE STATION UNIT
- 312: EXTERNAL ANTENNA
- 320: HOME NETWORK INTERFACE UNIT
- 350: STORAGE UNIT
- 352: HeNB ADDRESS
- 354: LGW MANAGEMENT TABLE
- 356: LHN IDENTIFIER

## Claims

1. A mobile communication system in which a home network and a core network are connected through an external network, a home base station device to which a mobile station device is connected and an access control device are connected to the home network, and a position managing device is connected to the core network,
wherein the home base station device
acquires identification information of the access control device and availability information of offload through a local network of the access control device,
manages the identification information of the access control device and the availability information of offload of the access control device,
notifies the position managing device of the identification information of the access control device and the availability information of offload of the access control device,
wherein the position managing device
receives information including the identification information of the access control device and the availability information of offload of the access control device from the home base station device, and
manages the identification information of the access control device, the availability information of offload of the access control device, and information of the home base station device in association with each other,
wherein the mobile station device makes a request for establishment of PDN connection for offload through the local network, and
wherein the position managing device selects an offload possible access control device, based on the request from the mobile station device, the identification information of the access control device, the availability information of offload of the access control device, and the information of the home base station device, and establishes the PDN connection between the access control device and the mobile station device.

2. A home base station device in a mobile communication system in which a home network and a core network are connected through an external network, the home base station device to which a mobile station device is connected and an access control device are connected to the home network, and a position managing device is connected to the core network,
wherein the position managing device is a device which selects the access control device, and establishes PDN connection between the access control device and the mobile station device,
acquires identification information of the access control device and availability information of offload of the access control device through a local network,
manages the identification information of the access control device and the availability information of offload of the access control device, and
requests the position managing device to register information used for selection of the access control device in a case where the position managing device establishes the PDN connection for offload through the local network, by notifying the position managing device of the identification information of the access control device and the availability information of offload of the access control device.

3. A position managing device in a mobile communication system in which a home network and a core network are connected through an external network, a home base station device to which a mobile station device is connected and an access control device are connected to the home network, and a position managing device is connected to the core network,
wherein the position managing device
receives information including identification information of the access control device and availability information of offload of the access control device from the home base station device, and
manages the identification information of the access control device, the availability information of offload of the access control device, and information of the home base station device in association with each other,
wherein the mobile station device makes a request for establishment of PDN connection for offload through the local network, and
wherein the position managing device selects an offload possible access control device, based on the request from the mobile station device, the identification information of the access control device, the availability information of offload of the access control device, and the information of the home base station device, and establishes the PDN connection between the access control device and the mobile station device.

4. A communication method of a mobile communication system in which a home network and a core network are connected through an external network, a home base station device to which a mobile station device is connected and an access control device are connected to the home network, and a position managing device is connected to the core network,
wherein the home base station device
acquires identification information of the access control device and availability information of offload of the access control device through a local network,
manages the identification information of the access control device and the availability information of offload of the access control device,
notifies the position managing device of the identification information of the access control device and the availability information of offload of the access control device, and
wherein the position managing device
receives information including the identification information of the access control device and the availability information of offload of the access control device from the home base station device, and
manages the identification information of the access control device, the availability information of offload of the access control device, and the information of the home base station device in association with each other,
wherein the mobile station device makes a request for establishment of PDN connection for offload through the local network, and
wherein the position managing device selects an offload possible access control device, based on the request from the mobile station device, the identification information of the access control device, the availability information of offload of the access control device, and the information of the home base station device, and establishes the PDN connection between the access control device and the mobile station device.

5. A mobile station device connected to the mobile communication system according to Claim 1.
